# EUROPÄISCHE PATENTANMELDUNG

(11) **EP 0 599 091 A2**
(43) Veröffentlichungstag der Anmeldung: **01.06.1994**
(21) Anmeldenummer: 93117669.7
(22) Anmeldetag: 02.11.1993
(51) Int. Cl.: G01N 31/16

(54) **Titrantkomponente und Reagenz zur Wasserbestimmung**

(30) Priorität: 20.11.1992 DE 4239115
(71) Anmelder: RIEDEL-DE HAEN AKTIENGESELLSCHAFT, D-30926 Seelze (DE)
(72) Erfinder: Matschiner, Hermann, Prof. Dr., D-06114 Halle/Saale (DE); Maschmeier, Claus-Peter, Dr., D-06110 Halle/Saale (DE)
(74) Vertreter: Geissler, Bernhard, Dr. jur., Dipl.-Phys.

(57) **Zusammenfassung**

Die erfindungsgemäße Titrantkomponente dient zur quantitaven Bestimmung von Wasser und enthält in einem aprotischen Lösungsmittel Brom in gebundener Form.

## Beschreibung

Die Erfindung betrifft eine Titrantkomponente und ein Reagenz zur quantitativen Bestimmung von Wasser, wobei das Reagenz aus der erfindungsgemäßen Titrantkomponente und einer Solventkomponente besteht. Die Erfindung betrifft auch ein Verfahren zur quantitativen Bestimmung von Wasser unter Verwendung der erfindungsgemäßen Titrantkomponente oder des erfindungsgemäßen Reagenzes.

Das wichtigste analytische Verfahren zur Wasserbestimmung ist die Karl-Fischer-Titration. Für eine große Zahl von Anwendungsfällen existieren erprobte Vorschriften, die eine schnelle und sichere Bestimmung des Wassergehalts erlauben (E. Scholz, Karl-Fischer-Titration, 1. Aufl., Berlin, Heidelberg, New York, Tokyo: Springer Verlag 1984).

Die Karl-Fischer-Titration wird in der Regel in methanolischer Lösung durchgeführt. Dabei wird Methylsulfit in Gegenwart einer Base mit Iod zu Methylsulfat oxidiert.

SO₂ + ROH + B → BHSO₃R (1)

BHSO₃R + I₂ + H₂O + 2 B → BHSO₄R + 2BHI (2)

B = Base, ROH = Methanol
Zur Durchführung der Karl-Fischer-Titration sind Einkomponenten- und Zweikomponenten-Reagenzien im Handel. Die Einkomponenten-Reagenzien enthalten alle reaktiven Bestandteile der Karl-Fischer-Reaktion in einer Lösung. Bei den Zweikomponenten-Reagenzien enthält die eine Komponente Schwefeldioxid, ein Amin und den Alkohol (Solventkomponente), die andere Komponente stellt z.B. eine methanolische Iodlösung dar (Titrantkomponente).

Nachteilig bei der Karl-Fischer-Titration ist, daß das relativ teuere Iod als Oxidationsmittel erforderlich ist. Billigere Oxidationsmittel, wie Chlor oder Brom, führen zu einer Vielzahl von Nebenreaktionen und werden deshalb als Oxidationsmittel bei Karl-Fischer-Titrationen nicht verwendet (J.Mitchell, D.M.Smith: Aquametry, J.Wiley and Sons, New York 1980).

Eine Aufgabe der Erfindung ist es daher, eine Titrantkomponente und ein Reagenz anzugeben, mit denen Wasser quantitativ ohne Iod als direktes Oxidationsmittel bestimmt werden kann. Die Aufgabe wird anspruchsgemäß gelöst.

Die erfindungsgemäße Titrantkomponente enthält in einem aprotischen Lösungsmittel Brom in gebundener Form. Dieses Brom in gebundener Form wirkt als Oxidationsmittel.

Das Brom in gebundener Form kann z.B. als N-Brom-Verbindung, z.B. als N-Brom-carboxamid, N-Brom-carboximid, N-Brom-alkanlactam, N-Brom-hydantoin, als Addukt von Brom an ein Tetraalkylammoniumsalz bzw. als quaternäres Ammoniumpolybromid vorliegen.

Die Verwendung von N-Brom-carboxamiden, N-Brom-carboximiden und Addukten von Brom an Tetraalkylammoniumsalzen, insbesondere solchen mit 1 bis 4 C-Atomen in den gleichen oder verschiedenen Alkylresten, ist bevorzugt. Besonders bevorzugt wird N-Brom-succinimid verwendet.

In der erfindungsgemäßen Titrantkomponente kann das als Oxidationsmittel dienende Brom in gebundener Form auch als ein Gemisch mehrerer der vorgenannten Verbindungen vorhanden sein. Die Titrantkomponente kann von der Verbindung, die das Brom in gebundener Form enthält, 0,01 bis 5 mol/l, vorzugsweise 0,01 bis 2 mol/l, ganz besonders bevorzugt 0,08 bis 0,5 mol/l, enthalten.

Bevorzugt werden als aprotisches Lösungsmittel Acetonitril, Propylencarbonat, Ethylacetat, Tetrahydrofuran, Dioxan, Dimethylformamid oder Methylenchlorid oder Mischungen davon.

Die erfindungsgemäße Titrantkomponente wird zusammen mit einer Solventkomponente für die Wasserbestimmung verwendet. Diese Solventkomponente muß die für die KF-Reaktion erforderliche Base, das Schwefeldioxid und Iodid enthalten. Dafür sind praxisübliche und im Handel erhältliche Lösungen geeignet (E. Scholz, Karl-Fischer-Titration, Springer Verlag 1984, Seite 30 - 32). Ebenso können auch Amin-SO₂-Addukte in aprotischen Lösungsmitteln verwendet werden.

Die Solventkomponente kann auch ein Gemisch verschiedener Basen und/oder Iodide enthalten.

Als Solventkomponente sind in der Regel auch übliche Karl-Fischer-Reagenzien für die Coulometrie geeignet (vgl. z.B. DE-A-3 904 992). Eventuell in diesen Reagenzien für die coulometrische Wasserbestimmung vorhandene Zusätze, wie Leitsalze, stören normalerweise nicht.

Zur Bestimmung von Wasser wird die zu untersuchende Probe, vorzugsweise in einem gegen den Zutritt von Feuchtigkeit geschützten Titriergefäß, in eine Solventkomponente gegeben und mit der erfindungsgemäßen Titrantkomponente titriert. Der Titrationsendpunkt kann in an sich bekannter Weise sehr zuverlässig, wie bei den klassischen Karl-Fischer-Titrationen, z.B. visuell, photometrisch, z.B. mit Hilfe eines Eintauchphotometers, oder elektrochemisch indiziert werden, z.B. potentiometrisch oder amperometrisch, insbesondere bipotentiometrisch und biamperometrisch.

Aus dem Verbrauch der Titrantkomponente wird der Wassergehalt der zu untersuchenden Probe berechnet.

Wenn die Solventkomponente selbst Wasser enthält, so ist dieser Anteil bei der Berechnung zu berücksichtigen bzw. zuerst in einer Blindtitration zu ermitteln. Sie kann aber auch durch eine Vortitration entwässert werden. Dann wird die Probe in der vorentwässerten Solventkomponente titriert.

### AUSFÜHRUNGSBEISPIELE

### Beispiel 1:

In einem geschlossenen Titrationsgefäß werden 2 g des molaren 1:1-Trimethylamin-Schwefeldioxid-Addukts, das sich in bekannter Weise spontan aus den Einzelkomponenten bildet, unter Feuchtigkeitsausschluß in 40 ml Propylencarbonat gelöst. Dies ist eine Solventkomponente. Anschließend titriert man mit 0,125 molarer N-Brom-succinimidlösung in Propylencarbonat trocken und erzeugt einen Überschuß von etwa 0,5 ml der Bromsuccinimidlösung. Das Überschreiten des Äquivalenzpunktes wird photometrisch mit Hilfe des Lichts einer blauen Lichtemitterdiode detektiert. Jetzt wird die wasserhaltige Probe dosiert und mit der N-Brom-succinimidlösung bis zum erneuten Überschreiten des Äquivalenzpunktes titriert. Aus der Volumendifferenz zwischen den Äquivalenzpunkten wird der Wassergehalt berechnet.

### Beispiel 2:

Es wird wie im Beispiel 1 titriert. Es werden zwei Platindrähte zur bipotentiometrischen Indikation des Überschusses an Bromsuccinimid verwendet.

### Beispiel 3:

In einem geschlossenen Titrationsgefäß werden 3 g des molaren 1:1-Trimethylamin-Schwefeldioxid-Addukts unter Feuchtigkeitsausschluß in 40 ml Propylencarbonat gelöst. Anschließend wird mit einer Propylencarbonatlösung, die 24 g des Addukts aus Brom und Tetraethylammoniumbromid (Formel N(C₂H₅)₄Br₂)in 1000 ml enthält, vortitriert und ein Reagenzüberschuß von 0,5 ml der Titrantkomponente vorgelegt. Das Überschreiten des Äquivalenzpunktes wird photometrisch mit Hilfe des Lichtes einer blauen Lichtemitterdiode detektiert. Jetzt wird die wasserhaltige Probe dosiert und mit der Titrantkomponente bis zum erneuten Überschreiten des Äquivalenzpunktes titriert. Aus der Volumendifferenz zwischen den Äquivalenzpunkten wird der Wassergehalt berechnet.

### Beispiel 4:

30 ml einer methanolischen Lösung, die im Liter 106 g Diethanolamin (Base), 64 g SO₂ und 12 g Iodid enthält, werden in einen handelsüblichen Karl-Fischer-Autotitrator gegeben. Als Titrationsmittel wird eine 0,125 molare Lösung von N-Bromsuccinimid in Acetonitril verwendet. Der Wassergehalt wird dann durch Dosieren von Proben in den Titrator automatisch bestimmt.

## Patentansprüche

1. Titrantkomponente zur quantitativen Bestimmung von Wasser, dadurch gekennzeichnet, daß sie in einem aprotischen Lösungsmittel Brom in gebundener Form enthält.

2. Titrantkomponente nach Anspruch 1, dadurch gekennzeichnet, daß das gebundene Brom in Form einer N-Brom-Verbindung, insbesondere in Form eines N-Brom-carboxamids, N-Brom-carboximids oder eines Addukts von Brom an ein Tetraalkylammoniumsalz vorliegt.

3. Titrantkomponente nach Anspruch 1 und/oder 2, dadurch gekennzeichnet, daß das Brom in gebundener Form als N-Bromsuccinimid vorliegt.

4. Titrantkomponente nach einem oder mehreren der Ansprüche 1 bis 3, dadurch gekennzeichnet, daß sie von der Verbindung, die das Brom in gebundener Form enthält, 0,01 bis 5 mol/l, vorzugsweise 0,01 bis 2 mol/l, ganz besonders bevorzugt 0,08 bis 0,5 mol/l, enthält.

5. Reagenz zur quantitativen Bestimmung von Wasser, bestehend aus einer Titrant- und einer Solventkomponente, gekennzeichnet durch eine Titrantkomponente nach einem oder mehreren der Ansprüche 1 bis 4.

6. Verfahren zur quantitativen Bestimmung von Wasser in einer wasserhaltigen Probe, dadurch gekennzeichnet, daß die wasserhaltige Probe in eine Solventkomponente gegeben und mit einer Titrantkomponente nach einem oder mehreren der Ansprüche 1 bis 4 titriert wird.
